(19) Europäisches Patentamt
European Patent Office
Office européen des brevets

(11) **EP 2 985 628 B1**

(12) **EUROPÄISCHE PATENTSCHRIFT**

(45) Veröffentlichungstag und Bekanntmachung des Hinweises auf die Patenterteilung:
**25.10.2017 Patentblatt 2017/43**

(51) Int Cl.:
***G01S 17/74*** *(2006.01)*

(21) Anmeldenummer: **15178045.9**

(22) Anmeldetag: **23.07.2015**

(54) **VERFAHREN ZUR SIMULTANEN DATENÜBERTRAGUNG UND ABSTANDSMESSUNG**

METHOD FOR SIMULTANEOUS DATA TRANSMISSION AND DISTANCE MEASUREMENT

PROCEDE DE TRANSMISSION DE DONNEES SIMULTANEE ET MESURE D'INTERVALLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2014 DE 102014111589**

(43) Veröffentlichungstag der Anmeldung:
**17.02.2016 Patentblatt 2016/07**

(73) Patentinhaber: **SICK AG**
**79183 Waldkirch/Breisgau (DE)**

(72) Erfinder:
• **Menzel, Simon**
**79194 Gundelfingen (DE)**
• **Tschuch, Dr. Sebastian**
**79104 Freiburg (DE)**

(74) Vertreter: **Manitz Finsterwald Patentanwälte PartmbB**
**Martin-Greif-Strasse 1**
**80336 München (DE)**

(56) Entgegenhaltungen:
**AT-B- 329 117      US-A1- 2005 058 081**

• **THORBJORNSEN B ET AL: "Radio frequency (RF) time-of-flight ranging for wireless sensor networks; Radio frequency time-of-flight ranging for wireless sensor networks", MEASUREMENT SCIENCE AND TECHNOLOGY, IOP, BRISTOL, GB, Bd. 21, Nr. 3, 1. März 2010 (2010-03-01), Seite 35202, XP020174450, ISSN: 0957-0233**
• **SANG-IL KO ET AL: "A short range measurement using RF signal's propagation time based on vernier effect", ICCAS-SICE, 2009, IEEE, PISCATAWAY, NJ, USA, 18. August 2009 (2009-08-18), Seiten 1956-1961, XP031567048, ISBN: 978-4-907764-34-0**

## Beschreibung

Die vorliegende Erfindung betrifft ein Verfahren zur simultanen Datenübertragung und Abstandsmessung zwischen einer ersten Vorrichtung und einer zweiten Vorrichtung, wobei die erste Vorrichtung und die zweite Vorrichtung jeweils eine zur optischen Datenübertragung ausgebildete Sendeeinrichtung, eine zum optischen Datenempfang ausgebildete Empfangseinrichtung und eine mit der Sendeeinrichtung und der Empfangseinrichtung gekoppelte Steuereinheit aufweisen, wobei jede Steuereinheit einen vorbestimmten Systemtakt aufweist. Dabei wird von der ersten Vorrichtung an die zweite Vorrichtung ein erstes Datensignal und von der zweiten Vorrichtung an die erste Vorrichtung ein zweites Datensignal übertragen, wobei anhand der übertragenen Datensignale der Abstand zwischen der ersten Vorrichtung und der zweiten Vorrichtung ermittelt wird.

Beispielsweise bei fahrerlosen Fahrzeugen, insbesondere bei Regalbediengeräten (RBGs), ist es notwendig, eine kontinuierliche Datenübertragung zu dem Fahrzeug zu ermöglichen, um z.B. Steuer- und Sensordaten zu übertragen.

Zudem muss das fahrerlose Fahrzeug in der Lage sein, seine Position möglichst genau zu bestimmen.

Die DE 10 2008 059 819 B4 offenbart dazu eine optische Entfernungs- bzw. Abstandsmessung und eine parallele Datenübertragung per Funk.

Eine Entfernungsmessung, welche auf einer Laufzeitmessung oder einer Triangulation von reflektiertem Licht beruht, ist aus der US 6,765,495 B1, der WO 99/60629 und der EP 1 980 870 A1 bekannt. Die US 2014/0009340 A1 beschreibt, zur Entfernungsmessung die zeitliche Position von Flanken eines empfangenen Signals mehrmals auszuwerten, um deren zeitliche Position genauer zu bestimmen.

Die US 2005/0058081 A1 beschreibt ein Verfahren und eine Vorrichtung gemäß dem Oberbegriff der unabhängigen Ansprüche. Aus Thorbjornsen B. et al: "Radio frequency (RF) time-of-flight ranging for wireless sensor networks" (ISSN: 0957-0233) ist eine Abstandsmessung bekannt, die zwei zueinander versetzte Systemtakte verwendet. Ferner ist auch aus Sang-Il Ko et al: "A short range measurement using RF signal's propagation time based on vernier effect" (XP031567048; ISBN: 978-4-907764-34-0) die Verwendung zweier zueinander versetzter Takte bekannt.

Zur Entfernungsmessung anhand von reflektiertem Licht muss die Vorrichtung zum Empfang des reflektierten Lichts ausgebildet sein. Auch ein entsprechender Reflektor muss vorgesehen sein. In der Folge ist ein erhöhter konstruktiver Aufwand notwendig. Zudem kann die Genauigkeit der Entfernungsmessung bei rückreflektiertem Licht mit steigender Entfernung ungenügend sein.

Es ist die der Erfindung zugrundeliegende Aufgabe, ein Verfahren zur simultanen Datenübertragung und Abstandsmessung anzugeben, welches mit möglichst geringem Hardwareaufwand zu implementieren ist und zugleich eine hohe Genauigkeit der Abstandsmessung sicherstellt.

Diese Aufgabe wird durch ein Verfahren gemäß Anspruch 1 und insbesondere dadurch gelöst, dass der zeitliche Versatz von Flanken eines der Datensignale zu dem jeweiligen Systemtakt mehrmals gemessen wird, um den Abstand zwischen der ersten Vorrichtung und der zweiten Vorrichtung zu ermitteln. Zudem werden der Systemtakt der ersten Vorrichtung und der Systemtakt der zweiten Vorrichtung zeitlich gegeneinander verschoben. Außerdem wird ein von der Empfangseinrichtung empfangenes Datensignal überabgetastet, um die Position einer Flanke zu bestimmen. Die Bestimmung eines ermittelten Versatzes umfasst eine statistische Auswertung einer vorbestimmten Anzahl von Werten des gemessenen Versatzes der Flanken des Datensignals zu dem Systemtakt. Weiterhin umfasst die statistische Auswertung die Zusammenfassung der vorbestimmten Anzahl von Werten des gemessenen Versatzes in einem Histogramm.

Der Erfindung liegt dabei die Erkenntnis zugrunde, dass die ohnehin übertragenen Datensignale auch zur Abstandsmessung verwendet werden können. Ein zusätzlicher Hardwareaufwand, beispielsweise für einen separaten Empfänger zur Abstandsmessung, ist somit nicht erforderlich. Das erfindungsgemäße Verfahren lässt sich somit mit geringen Kosten durchführen und ermöglicht es zusätzlich, die benötigten Vorrichtungen klein und damit platzsparend auszubilden.

Das erste und das zweite Datensignal enthalten insbesondere Nutzdaten, beispielsweise Steuerdaten für ein fahrerloses Fahrzeug. Dabei ist das erste Datensignal von dem zweiten Datensignal verschieden, es erfolgt also keine bloße Reflexion des Datensignals an der ersten oder zweiten Vorrichtung. Die mit den Datensignalen zwischen den Vorrichtungen übertragenen Informationen können mittels On-Off-Keying (OOK) binär codiert sein, d.h. ein Lichtsender der Sendeeinrichtung ist eingeschaltet, wenn eine binäre 1 übertragen wird und ausgeschaltet, wenn eine binäre 0 gesendet wird. Der Lichtsender kann als Laser, insbesondere als Laserdiode, ausgebildet sein, wobei ein Leitungscode, wie der 8b10b-Code, verwendet werden kann. Aufgrund der Verwendung eines Leitungscodes können Kontrollsequenzen in die Datensignale eingebaut werden.

Erfindungsgemäß wird also ein einziger Kommunikationskanal, nämlich der Kommunikationskanal zur Datenübertragung zwischen den beiden Vorrichtungen, verwendet, um sowohl die Datenübertragung als auch die Abstandsmessung zu realisieren. Es besteht eine Punkt-zu-Punkt-Verbindung zwischen den beiden Vorrichtungen.

Insbesondere können die Datensignale eine Datenrate von 100 Mbit/s aufweisen. Dies hat den Vorteil, dass zur Abstandsmessung eine Vielzahl von Datenbits zur Auswertung zur Verfügung stehen. Die Abstandsmessung kann folglich sowohl besonders schnell als auch besonders genau erfolgen.

Zur Abstandsmessung kann die Zeit bestimmt werden, die ein Datenbit eines Datensignals von der ersten Vorrichtung zur zweiten Vorrichtung oder umgekehrt benötigt. Aus der konstanten Ausbreitungsgeschwindigkeit des per Licht übertragenen Datensignals (d.h. der Lichtgeschwindigkeit) kann dann der Abstand zwischen der ersten und der zweiten Vorrichtung ermittelt werden, was zum Beispiel von einer der Steuereinheiten vorgenommen werden kann, die entsprechend ausgestaltet ist.

Dabei ist es von Verteil, die Steuereinheit als FPGA (Field Programmable Gate Array) auszubilden, da die in dem FPGA üblicherweise im Wesentlichen konstante Gatter- bzw. Logiklaufzeit auf einfache Weise bestimmbar ist und berücksichtigt werden kann, wodurch die Abstandsmessung genauer erfolgen kann.

Weitere vorteilhafte Ausführungsformen der Erfindung sind der Beschreibung, den Zeichnungen sowie den Unteransprüchen zu entnehmen.

Gemäß einer ersten vorteilhaften Ausführungsform werden der Systemtakt der ersten Vorrichtung und der Systemtakt der zweiten Vorrichtung durch eine Auswahl unterschiedlicher Frequenzen für die Systemtakte der ersten und zweiten Vorrichtung zeitlich gegeneinander verschoben. Aufgrund der Verschiebung der Systemtakte werden aufeinanderfolgende Datenbits eines empfangenen Datensignals jeweils an unterschiedlichen Positionen relativ zu dem Systemtakt der empfangenden Vorrichtung empfangen. Dies bedeutet, eine Flanke eines Datenbits weist jeweils eine bestimmte Phasenlage bzw. einen bestimmten zeitlichen Versatz zu der Flanke des Systemtakts der jeweiligen Vorrichtung auf. Die Flanke eines darauffolgenden Datenbits des Datensignals weist aufgrund der Verschiebung einen anderen Versatz zu der Flanke des Systemtakts auf, als die vorhergehende Flanke. Dies ermöglicht es, ein beispielsweise rechteckförmiges, sich wiederholendes Datensignal an unterschiedlichen Relativpositionen bezüglich der Flanken der Datenbits und damit genauer abzutasten. Auf diese Weise wird die Genauigkeit der Abstandsmessung erhöht.

Insbesondere kann der Unterschied zwischen den Frequenzen der Systemtakte der ersten und der zweiten Vorrichtung (d.h. die Verstimmung) kleiner als 100 ppm, also kleiner als 0,1 Promille, sein. Die Verstimmung kann bekannt bzw. vorbestimmt sein oder im Betrieb beispielsweise durch Uhrzeitsynchronisation zwischen der ersten und der zweiten Vorrichtung gemessen werden.

Wenn die Frequenzen der Systemtakte unterschiedlich sind, kommt es zu einer kontinuierlichen Verschiebung (Schwebung) der Systemtakte.

Die erste und die zweite Vorrichtung können identisch ausgeführt sein. In diesem Fall kann es ausreichen, dass Fertigungstoleranzen der Bauteile zu einer ausreichenden Verschiebung der Systemtakte gegeneinander führen.

Gemäß einer weiteren vorteilhaften Ausführungsform wird das übertragene Datensignal beim Empfang in der ersten und/oder der zweiten Vorrichtung mit einer variablen Verzögerung versehen. Die Verzögerung kann alternativ oder zusätzlich zu der bereits erwähnten Verschiebung der Systemtakte verwendet werden, um einen Zeitversatz der Flanken der Datenbits zu den Flanken des jeweiligen Systemtakts zu erzeugen. Beispielsweise kann die Verzögerung nach Art eines variablen I/O-Delays bei einem DDR3-RAM erfolgen. Die Verzögerung kann variiert werden, um unterschiedliche Phasenlagen der Flanken der Datenbits zu den Flanken des Systemtakts zu erreichen, es wird also ein künstlicher Jitter erzeugt.

Bevorzugt werden die Größe der zeitlichen Verschiebung und/oder die Länge der Verzögerung während der Durchführung des Verfahrens geändert. Dies ermöglicht eine adaptive Anpassung der Abtastzeitpunkte, wobei beispielsweise die Verzögerung verringert werden kann, wenn der Empfangspegel niedrig ist. Alternativ kann der Abtastzeitpunkt jeweils auch vom Signal-Rausch-Verhältnis (SNR) abhängig gemacht werden.

Erfindungsgemäß wird ein von der Empfangseinrichtung empfangenes Datensignal überabgetastet, insbesondere zumindest 8-fach, bevorzugt zumindest 16-fach. Aufgrund der Überabtastung können die Bestimmung der Position der Flanke eines Datenbits und damit die Bestimmung der Ankunftszeit der jeweiligen Flanke deutlich genauer erfolgen. Dies ermöglicht eine genauere Bestimmung des Abstands zwischen der ersten und der zweiten Vorrichtung. Insbesondere erfolgt eine Digitalisierung bzw. Abtastung des jeweils empfangenen Datensignals mittels eines Ein-Bit-A/D-Wandlers (z.B. mittels des Eingangs-Komparators des FPGAs). Das erste und zweite Datensignal können beispielsweise bei einer Datenrate von 150 MHz mit einer Abtastfrequenz von 2,4 GHz abgetastet werden.

Erfindungsgemäß wird der zeitliche Versatz von Flanken des Datensignals zu dem Systemtakt mehrmals gemessen. Für eine besonders genaue Abstandsmessung ist eine möglichst genaue Bestimmung der Ankunftszeit der Flanken des Datensignals notwendig. Aufgrund der mehrmaligen Ermittlung und der Verschiebung der Systemtakte werden aufeinanderfolgende Datenbits an unterschiedlichen Zeitpunkten bezüglich des Systemtakts der empfangenden Vorrichtung abgetastet. Die Datenbits werden dabei von der sendenden Vorrichtung in ihrem Systemtakt gesendet und wiederholen sich demnach periodisch. Aufgrund der Abtastung mehrerer periodisch nacheinander folgender Datenbits kann aufgrund der Verschiebung der Systemtakte eine genauere Abtastung des Datensignals erfolgen, als dies eigentlich aufgrund der Abtastfrequenz möglich wäre. Damit wird eine sogenannte Sub-Sample-Genauigkeit erreicht.

Aufgrund der Abtastung mehrerer aufeinanderfolgender Datenbits kann der Versatz der Flanken des Datenstroms bis auf wenige Picosekunden genau ermittelt werden, wodurch sich eine Messgenauigkeit für den Abstand zwischen der ersten und der zweiten Vorrichtung von wenigen Millimetern ergibt. Dabei kann der Abstand zwischen den beiden Vorrichtungen mit einer umso größeren Messgenauigkeit bestimmt werden, umso genauer der Versatz zwischen den Flanken ermittelt wird.

Zur Bestimmung des zeitlichen Versatzes der Flanken des Datensignals können prinzipiell sämtliche Datenbits des Datensignals herangezogen werden, was zu einer in kurzer Zeit durchführbaren Messung des zeitlichen Versatzes führt.

Erfindungsgemäß umfasst die Bestimmung eines ermittelten Versatzes eine statistische Auswertung einer vorbestimmten Anzahl von Werten des gemessenen Versatzes der Flanken des Datensignals zu dem Systemtakt. Dies bedeutet, dass der Versatz der Flanken des Datensignals auf die oben beschriebene Weise mehrmals, beispielsweise 512, 1.024 oder 2.048 mal gemessen wird und anschließend eine statistische Auswertung der 512, 1.024 oder 2.048 Messwerte erfolgt, aus der sich der ermittelte Versatz ergibt. Aufgrund der statistischen Auswertung einer Vielzahl von Messwerten werden Messungenauigkeiten minimiert, so dass der ermittelte Versatz eine deutlich erhöhte Genauigkeit im Vergleich zu dem einzelnen gemessenen Versatz aufweist.

Die Verschiebung der Systemtakte gegeneinander kann dabei derart gewählt werden, dass sich die Systemtakte beispielsweise um den 1.024-ten Teil der zeitlichen Länge eines Systemtakts gegeneinander verschieben. Dies ermöglicht es, ein empfangenes Datenbit an 1.024 Relativpositionen zu einer Flanke des Systemtakts abzutasten.

Erfindungsgemäß umfasst die statistische Auswertung die Zusammenfassung der vorbestimmten Anzahl von Werten des gemessenen Versatzes in einem Histogramm, wobei die Bestimmung des ermittelten Versatzes insbesondere die Ermittlung des Schwerpunkts des Histogramms umfasst. Aus den einzelnen Werten für den gemessenen Versatz kann also ein Histogramm gebildet werden, um die tatsächliche Position der Flanke, d.h. den ermittelten Versatz genauer zu bestimmen. Insbesondere kann der Schwerpunkt des Histogramms ermittelt werden, da am Schwerpunkt die Wahrscheinlichkeit am größten ist, dass dort die tatsächliche Position der Flanke liegt.

Das Histogramm kann zudem um die Verschiebung der Systemtakte der ersten und zweiten Vorrichtung kompensiert sein. Dies bedeutet, die zeitlichen Positionen der Flanken des Datensignals können in das Histogramm auf der Grundlage der kompensierten Systemtakte eingetragen werden.

Die Anzahl der in das Histogramm einzutragenden Messwerte kann variabel gestaltet werden, dies bedeutet, das Histogramm kann breit oder schmal gewählt werden. Eine Auswahl der Anzahl der Messwerte kann in Relation zur Messwertgüte erfolgen. Zudem kann die Messwertgüte auch für einen der statistischen Auswertung nachgeschalteten Kalman-Filter verwendet werden.

Gemäß einer weiteren bevorzugten Ausführungsform der Erfindung umfasst die Bestimmung des ermittelten Versatzes die Berechnung einer linearen Regression zwischen den Schwerpunkten zweier oder mehrerer Histogramme. Der ermittelte Versatz und daraus der Abstand zwischen der ersten Vorrichtung und der zweiten Vorrichtung können auf diese Weise noch genauer bestimmt werden. Auch können mehrere Werte des durch lineare Regression bestimmten ermittelten Versatzes wiederum gemittelt werden, um die Genauigkeit nochmals zu steigern.

Gemäß einer weiteren vorteilhaften Ausführungsform werden vor der Ermittlung des Abstandes zwischen der ersten Vorrichtung und der zweiten Vorrichtung die Systemzeiten der ersten und der zweiten Vorrichtung synchronisiert. Die Synchronisation dient dazu, die absolute Übertragungszeit eines Datenbits von einer Vorrichtung zur anderen bestimmbar zu machen. Anhand der absoluten Übertragungszeit ist eine grobe Bestimmung des Abstands zwischen der ersten und der zweiten Vorrichtung möglich. Durch die zusätzliche Bestimmung des ermittelten Versatzes kann auf der groben Bestimmung aufsetzend eine sehr genaue Bestimmung des Abstandes vorgenommen werden. Die Ermittlung der absoluten Übertragungszeit dient also der Eliminierung von Mehrdeutigkeiten, da allein anhand des Versatzes der Flanken des Datensignals zu den Flanken des Systemtakts noch kein absoluter Abstand berechnet werden kann.

Die Synchronisation sorgt dafür, dass zwei Zähler für die jeweilige Systemzeit in der ersten und der zweiten Vorrichtung den gleichen Zählerstand aufweisen. Nach einem Synchronisationsvorgang driften die Zählerstände voneinander weg, da die Systemtakte unabhängig sind (sogenannte "free-running clocks").

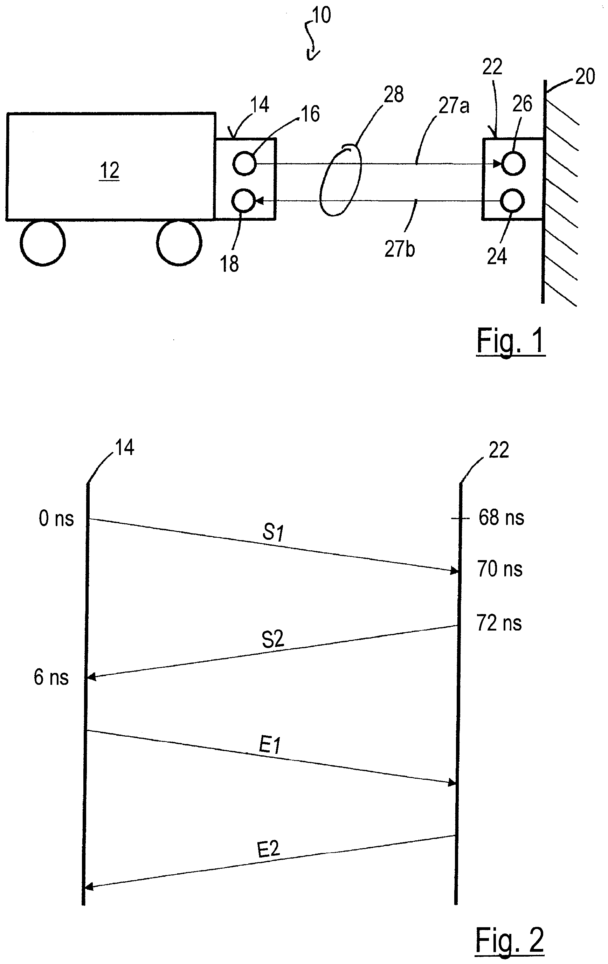

Bevorzugt werden zur Synchronisierung der Systemzeiten von der ersten und der zweiten Vorrichtung an die jeweils andere Vorrichtung eine erste Nachricht, welche ihren Sendezeitpunkt bezüglich der Systemzeit der jeweils sendenden Vorrichtung enthält, und eine zweite Nachricht, welche den Empfangszeitpunkt der ersten Nachricht bezüglich der jeweils die erste Nachricht empfangenden Vorrichtung enthält, versandt. Im Folgenden werden die erste Nachricht der ersten Vorrichtung mit S1, die erste Nachricht der zweiten Vorrichtung mit S2, die zweite Nachricht der ersten Vorrichtung mit E1 und die zweite Nachricht der zweiten Vorrichtung mit E2 bezeichnet. Auch die in der jeweiligen Nachricht enthaltenen Sende- oder Empfangszeitpunkte werden der Einfachheit halber im Folgenden mit S1, S2, E1 bzw. E2 bezeichnet. Beispielsweise wird also der Sendezeitpunkt der ersten Nachricht der ersten Vorrichtung entsprechend der Nachricht, mit der er übermittelt wird, als S1 bezeichnet. Der Sendezeitpunkt der ersten Nachricht der zweiten Vorrichtung, die mit der ersten Nachricht der zweiten Vorrichtung übermittelt wird, wird mit S2 bezeichnet. Der Empfangszeitpunkt der von der zweiten Vorrichtung versendeten ersten Nachricht an der ersten Vorrichtung wird als E1 bezeichnet (Er wird mit der Nachricht E1 von der ersten an die zweite Vorrichtung übermittelt). Entsprechend wird der Empfangszeitpunkt der von der ersten Vorrichtung versendeten ersten Nachricht an der zweiten Vorrichtung als E2 bezeichnet (Er wird mit der zweiten Nachricht E2 der zweiten Vorrichtung von der zweiten an die erste Vorrichtung übermittelt). In diesem Zusammenhang wird auf die Fig. 2 und deren weiter unten folgende detaillierte Erläuterung verwiesen.

Die Synchronisierung der Systemzeiten kann beispielsweise nach jeder Bestimmung des ermittelten Versatzes und/oder periodisch nach Ablauf einer vorbestimmten Zeitdauer erfolgen. Bevorzugt werden die ersten Nachrichten im Wesentlichen gleichzeitig gesendet. Dies ist nach zumindest einer ersten vorangegangenen Synchronisierung möglich.

Gemäß einer weiteren vorteilhaften Ausführungsform wird ein Versatz der Systemzeiten der ersten und der zweiten Vorrichtung nach der Formel [(E2-S1)+(S2-E1)]/2 berechnet. Der Versatz der Systemzeiten, der auch als Offset bezeichnet wird, ist berechenbar, da die erste und die zweite Vorrichtung jeweils Kenntnis von vier Zeitpunkten hat. Beispielhaft sei dies nachfolgend für die erste Vorrichtung erläutert, wobei sich die Zeitpunkte immer auf die Systemzeit der jeweiligen Vorrichtung beziehen.

Der ersten Vorrichtung ist der Zeitpunkt bekannt, an welchem sie die erste Nachricht versandt hat (S1). Weiterhin empfängt die erste Vorrichtung von der zweiten Vorrichtung den Sendezeitpunkt der ersten Nachricht der zweiten Vorrichtung (S2). Auch der Empfangszeitpunkt der ersten Nachricht der zweiten Vorrichtung ist der ersten Vorrichtung bekannt (E1). Schließlich wird der ersten Vorrichtung von der zweiten Vorrichtung noch der Empfangszeitpunkt der ersten Nachricht der ersten Vorrichtung bei der zweiten Vorrichtung mitgeteilt (E2).

Es ergeben sich somit zwei Gleichungen:

$$(1)\ E2\text{-}S1 = \text{Offset} + \text{Übertragungszeit},$$

und

$$(2)\ E1\text{-}S2 = \text{Übertragungszeit} - \text{Offset}.$$

Es wird davon ausgegangen, dass die Übertragungszeit von der ersten zur zweiten Vorrichtung gleich der Übertragungszeit von der zweiten zur ersten Vorrichtung ist. Dementsprechend können die beiden obigen Formeln nach dem Offset, d.h. dem Versatz der Systemzeiten, aufgelöst werden. Folglich ergibt sich für den Offset die Formel [(E2-S1)+(S2-E1)]/2. Somit ist der Versatz der Systemzeiten durch den Austausch von vier Nachrichten bestimmbar. Die Nachrichten werden mittels des jeweiligen Datensignals übertragen.

Bevorzugt wird die Systemzeit der ersten oder der zweiten Vorrichtung um diesen Versatz korrigiert. Nach der Korrektur sind die Systemzeiten im Wesentlichen identisch und die Synchronisation ist abgeschlossen.

Besonders bevorzugt wird der ermittelte Versatz, d.h. der Sub-Sample-Versatz, zu den Empfangszeitpunkten (E1, E2) der ersten Nachrichten addiert. Auf diese Weise lässt sich die Genauigkeit der Synchronisation der Systemzeiten nochmals steigern. Insbesondere wird der ermittelte Versatz als Nachkommastelle an die Empfangszeitpunkte (E1, E2) bei deren Übertragung angefügt.

Bei der Durchführung des Verfahrens kann beispielsweise zunächst eine Synchronisation der Systemzeiten der ersten und zweiten Vorrichtung stattfinden. Anschließend erfolgt aufgrund der kontinuierlichen Verschiebung der Systemtakte gegeneinander eine Abtastung von z.B. 1.024 Datenbits an 1.024 verschiedenen Positionen innerhalb eines Takts des Systemtakts. Anhand einer statistischen Auswertung der 1.024 Werte für den gemessenen Versatz wird der ermittelte Versatz bestimmt, wobei die Bestimmung des Abstands zwischen der ersten Vorrichtung und der zweiten Vorrichtung anhand einer linearen Interpolation zwischen zwei Werten des ermittelten Versatzes erfolgt. Dabei kann der Zeitpunkt der Synchronisierung berücksichtigt werden.

Bevorzugt kann auch anstelle der linearen Interpolation zwischen zwei Histogrammauswertungen eine lineare Approximation aus mehreren, beispielsweise 8 oder 16, Histogrammauswertungen mittels eines Least-Squares-Schätzers erfolgen. Auf diese Weise kann der statistische Messfehler reduziert werden.

Aufgrund der hohen Datenrate des Datensignals und der Verwendung der Nutzdaten zur Bestimmung des ermittelten Versatzes (und damit auch zur Bestimmung des Abstandes zwischen der ersten und der zweiten Vorrichtung) ist eine äußerst schnelle und genaue Bestimmung des Abstandes ohne eine Unterbrechung der Datenübertragung möglich. Der Abstand kann beispielsweise innerhalb von weniger als einer Millisekunde mit Millimetergenauigkeit bestimmt werden.

Die Erfindung betrifft weiterhin ein System zur simultanen Datenübertragung und Abstandsmessung mit einer ersten Vorrichtung und einer zweiten Vorrichtung, wobei die erste Vorrichtung und die zweite Vorrichtung jeweils eine zur optischen Datenübertragung ausgebildete Sendeeinrichtung, eine zum optischen Datenempfang ausgebildete Empfangseinrichtung und eine mit der jeweiligen Sendeeinrichtung und der jeweiligen Empfangseinrichtung gekoppelte Steuereinheit aufweisen, wobei die Steuereinheit jeweils mit einem vorbestimmten Systemtakt betreibbar ist. Das System zeichnet sich dadurch aus, dass die erste Vorrichtung und die zweite Vorrichtung ausgebildet sind, jeweils aneinander ein Datensignal zu übertragen, wobei zumindest eine Steuereinheit ausgebildet ist, anhand des übertragenden Datensignals den Abstand zwischen der ersten Vorrichtung und der zweiten Vorrichtung zu ermitteln. Erfindungsgemäß wird dabei der zeitliche Versatz von Flanken eines der Datensignale zu dem jeweiligen Systemtakt mehrmals gemessen, um den Abstand zwischen der ersten Vorrichtung und der zweiten Vorrichtung zu ermitteln. Zudem werden der Systemtakt der ersten Vorrichtung und der Systemtakt der zweiten Vorrichtung zeitlich gegeneinander verschoben. Weiter erfindungsgemäß wird ein von der Empfangseinrichtung empfangenes Datensignal überabgetastet, um die Position einer Flanke zu bestimmen. Die Bestimmung eines ermittelten Versatzes umfasst eine statistische Auswertung einer vorbestimmten Anzahl von Werten des gemessenen Versatzes der Flanken des Datensignals zu dem Systemtakt und die statistische Auswertung umfasst die Zusammenfassung der vorbestimmten Anzahl von Werten des gemessenen Versatzes in einem Histogramm.

Ferner betrifft die Erfindung ein fahrerloses Transportsystem, insbesondere ein Regalbediensystem, umfassend ein System der oben beschriebenen Art und ein fahrerloses Transportfahrzeug. Das Transportsystem zeichnet sich dadurch aus, dass die erste Vorrichtung an dem fahrerlosen Transportfahrzeug angebracht ist und die zweite Vorrichtung ortsfest ist. Insbesondere für Regalbediengeräte (RBGs) eignet sich eine optische Datenübertragung, da diese üblicherweise entlang eines geraden Weges parallel zu einem Regal verfahren. Somit kann eine Sichtverbindung zwischen der ersten Vorrichtung und der zweiten Vorrichtung zur optischen Datenübertragung auf einfache Weise aufrechterhalten werden. Aufgrund der zusätzlich zur Datenübertragung möglichen Abstandsmessung und damit Positionsbestimmung des RBGs können zusätzliche Mittel zur Positionsbestimmung bei dem RBG entfallen. Das RBG kann somit kostengünstiger und damit wirtschaftlich hergestellt und betrieben werden.

Im Übrigen gelten für das erfindungsgemäße System und das erfindungsgemäße fahrerlose Transportsystem die für das erfindungsgemäße Verfahren getroffenen Aussagen.

Nachfolgend wird die Erfindung rein beispielhaft unter Bezugnahme auf die Zeichnungen beschrieben.

Fig. 1    zeigt eine schematische Darstellung eines erfindungsgemäßen fahrerlosen Transportsystems;

Fig. 2    zeigt die Übermittlung von Nachrichten zur Synchronisation der Systemzeiten der ersten und zweiten Vorrichtung;

Fig. 3    dient der Verdeutlichung der Abtastung mehrerer Flanken eines Datensignals; und

Fig. 4    zeigt ein Histogramm mit der Häufigkeit von Werten des gemessenen Versatzes zur Bestimmung des ermittelten Versatzes.

Fig. 1 zeigt schematisch ein fahrerloses Transportsystem 10 mit einem Regalbediengerät (RBG) 12 als fahrerlosem Transportfahrzeug. An dem RBG 12 ist eine erste Vorrichtung 14 angebracht, die eine erste Sendeeinrichtung 16 sowie eine erste Empfangseinrichtung 18 umfasst. Die erste Sendeeinrichtung 16 weist einen (nicht gezeigten) Laser auf. Die erste Empfangseinrichtung 18 umfasst eine (nicht gezeigte) Fotodiode.

Die erste Vorrichtung umfasst ferner eine (ebenfalls nicht dargestellte) Steuereinheit, die elektrisch mit der ersten Sendeeinrichtung 16 und der ersten Empfangseinrichtung 18 gekoppelt ist.

Ortsfest, beispielsweise an einer Mauer 20, ist eine zweite Vorrichtung 22 angebracht. Die zweite Vorrichtung 22 ist identisch zu der ersten Vorrichtung 14 ausgebildet und umfasst dementsprechend eine zweite Sendeeinrichtung 24, eine zweite Empfangseinrichtung 26 und eine Steuereinheit.

Die erste Vorrichtung 14 und die zweite Vorrichtung 22 sind derart ausgerichtet, dass der Laser der ersten Sendeeinrichtung 16 ein mittels eines Lichtstrahls übertragenes erstes Datensignal 27a an die zweite Empfangseinrichtung überträgt. Entsprechend überträgt der Laser der zweiten Sendeeinrichtung 24 ein zweites Datensignal 27b an die erste Empfangseinrichtung 18.

Das erste Datensignal 27a und das zweite Datensignal 27b bilden gemeinsam einen Übertragungskanal 28 über welchen binär codierte Nutzdaten z.B. mittels Rechteckpulsen übertragen werden.

Die Systemtakte der Steuereinheiten der ersten Vorrichtung 14 und der zweiten Vorrichtung 22 können geringfügig gegeneinander verschoben sein.

Zur Angleichung der Systemzeiten der ersten Vorrichtung 14 und der zweiten Vorrichtung 22 werden die in Fig. 2 schematisch dargestellten Nachrichten zwischen den Vorrichtungen 14, 22 übertragen. Bei dem in Fig. 2 dargestellten Beispiel sind die Systemzeiten der ersten und zweiten Vorrichtung 14, 22 um 68 Nanosekunden (ns) versetzt, d.h. der Offset beträgt 68 ns. Die Übertragungsdauer für eine Nachricht über den Kanal 28 beträgt in dem Beispiel von Fig. 2 zwei Nanosekunden. Es versteht sich, dass diese beispielhaft angegebenen Zeitdauern lediglich der Veranschaulichung dienen und bei der realen Ausbildung der Erfindung die Zeitdauern deutlich unterschiedlich sein können.

Zum Zeitpunkt Null sendet die in Fig. 2 auf der linken Seite dargestellte erste Vorrichtung 14 an die rechterhand dargestellte zweite Vorrichtung 22 eine erste Nachricht S1, die die Sendezeit (0 ns) enthält. Diese Nachricht wird 2 ns später von der zweiten Vorrichtung 22 empfangen, wobei zu diesem Zeitpunkt die Systemzeit der zweiten Vorrichtung 22 bei 70 ns liegt. Bei 72 ns gemäß der Systemzeit der zweiten Vorrichtung 22 übermittelt die zweite Vorrichtung 22 ebenfalls eine erste Nachricht S2 an die erste Vorrichtung 14, welche wiederum 2 ns später bei der Systemzeit 6 ns der ersten Vorrichtung 14 dort eintrifft.

Anschließend überträgt die erste Vorrichtung 14 eine zweite Nachricht E1 an die zweite Vorrichtung, in welcher der zweiten Vorrichtung mitgeteilt wird, dass die Nachricht S2 bei Systemzeit 6 ns empfangen wurde. Ferner übermittelt die zweite Vorrichtung 22 die zweite Nachricht E2 an die erste Vorrichtung 14, und teilt der ersten Vorrichtung 14 mit, dass die erste Nachricht S1 bei Systemzeit 70 ns empfangen wurde. Die Zeitpunkte der Absendung der zweiten Nachrichten E1, E2 spielen keine Rolle und sind in Fig. 2 nicht genauer angegeben.

Anschließend berechnet die erste Vorrichtung 14 den Offset gemäß der Formel Offset = [(E2-S1)+(S2-E1)]/2, aus welcher sich der Offset von 68 ns ergibt ([(70 ns - 0 ns) + (72 ns - 6 ns)] / 2). Anschließend stellt die erste Vorrichtung 14 ihre Systemzeit um 68 ns vor, wodurch die Systemzeiten der ersten Vorrichtung 14 und der zweiten Vorrichtung 22 synchronisiert sind.

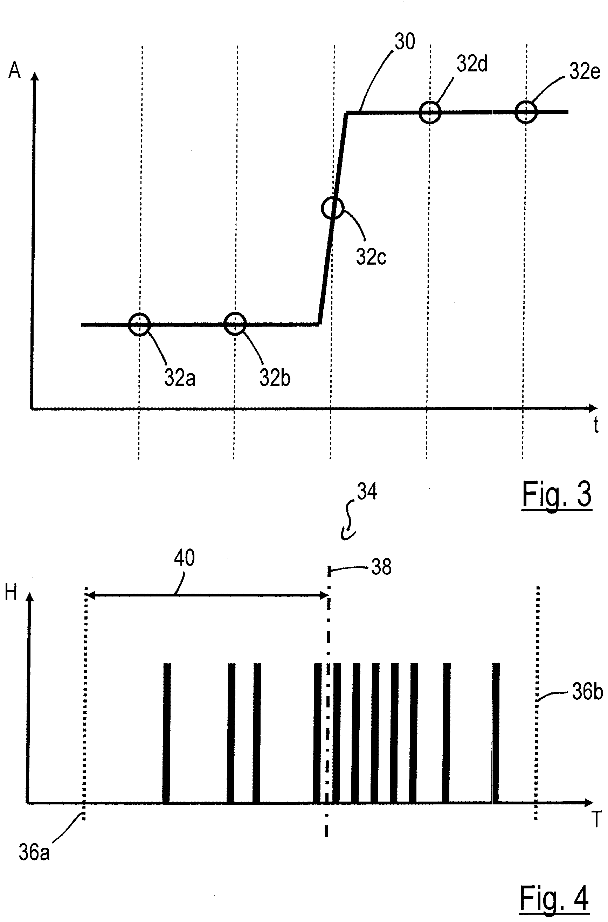

In Fig. 3 ist die Abtastung von Flanken verschiedener Datenbits eines Datensignals verdeutlicht, wie es beispielsweise von der ersten Empfangseinrichtung 18 der ersten Vorrichtung 14 empfangen wird. Dabei ist in einem Diagramm nach rechts die Zeit (t) und nach oben die Amplitude (A) des Datensignals angetragen. Die Abtastung der Flanken dient der genauen zeitlichen Erfassung der Position der Flanke, um aus der Position den Abstand der ersten und zweiten Vorrichtung 14, 22 zu ermitteln. Das Datensignal wird von der ersten Empfangseinrichtung sechzehnfach überabgetastet.

Ein ausschnittsweiser Signalverlauf 30 von Flanken von Datenbits eines Datensignals ist in Fig. 3 dargestellt, wobei der Signalverlauf 30 eine Vielzahl von periodisch wiederkehrenden Flanken repräsentiert, die nacheinander abgetastet werden. Die Flanken sind "übereinanderliegend" dargestellt, d.h. es ist nur eine Flanke sichtbar.

Die aufeinander folgenden Flanken werden an unterschiedlichen Positionen abgetastet. Eine erste Flanke wird an einem ersten Abtastzeitpunkt 32a abgetastet. Die darauffolgende Flanke wird an einem zweiten Abtastzeitpunkt 32b abgetastet, welcher gegenüber dem ersten Abtastzeitpunkt 32a verschoben ist. Die Verschiebung der Abtastzeitpunkte zwischen den Abtastzeitpunkten 32a, 32b erfolgt aufgrund der geringfügigen Unterschiede im Systemtakt der ersten Vorrichtung 14 und der zweiten Vorrichtung 22, wobei im gezeigten Beispiel die zweite Vorrichtung 22 in gleichen Intervallen Flanken sendet, sich der Abtastzeitpunkt aber nach jeder Flanke geringfügig verschiebt.

In Fig. 3 sind beispielhaft noch ein dritter Abtastzeitpunkt 32c, ein vierter Abtastzeitpunkt 32d und ein fünfter Abtastzeitpunkt 32e dargestellt, die jeweils zum vorhergehenden Abtastzeitpunkt geringfügig verschoben sind. Die Verschiebung zwischen den Abtastzeitpunkten 32a bis 32e weisen jeweils den gleichen zeitlichen Betrag auf.

Zur Veranschaulichung sind in Fig. 3 nur fünf Abtastzeitpunkte 32a - 32e dargestellt, tatsächlich kann eine Flanke aber beispielsweise mit 1.024 verschiedenen Abtastzeitpunkten abgetastet werden, wobei dafür 1.024 aufeinanderfolgende Flanken verwendet werden.

Aufgrund der Abtastung an 1.024 verschiedenen Abtastzeitpunkten ergeben sich beispielsweise durch Messungenauigkeiten und Schwankungen im Sendezeitpunkt für die verschiedenen Abtastzeitpunkte verschiedene Häufigkeiten bei der Erkennung einer Flanke. Diese Häufigkeiten können statistisch ausgewertet werden, beispielsweise mittels eines Histogramms 34.

Ein solches Histogramm 34 ist in Fig. 4 gezeigt, wobei in dem Histogramm 34 auf der Abszisse die Zeit T zwischen zwei Abtastzeitpunkten der Empfangseinrichtung bei sechzehnfacher Überabtastung angetragen sind. Die Grenzen des Histogramms 34 sind durch eine linke Begrenzungslinie 36a und eine rechte Begrenzungslinie 36b dargestellt. Der zeitliche Abstand zwischen der linken und rechten Begrenzungslinie 36a, 36b entspricht dem 1.024-fachen zeitlichen Abstand zweier benachbarter Abtastzeitpunkte 32a - 32e von Fig. 3.

Auf der Ordinate des Histogramms 34 ist die Häufigkeit einer erkannten Flanke angetragen, wobei die Häufigkeit bei einmaliger Abtastung an je 1.024 verschiedenen Abtastzeitpunkten entweder Null oder Eins sein kann. Beispielhaft sind in Fig. 4 elf Abtastzeitpunkte dargestellt, an welchen eine Flanke erkannt wurde. Der Abstand zwischen der linken Begrenzungslinie 36a und dem jeweiligen Abtastzeitpunkt, an dem eine Flanke erkannt wurde, stellt den gemessenen Versatz dar.

Alternativ kann das Histogramm 34 eine Anzahl von Werten, d.h. "Bins", enthalten, wobei die Anzahl der Bins dem Grad der Überabtastung entspricht. Dabei kann das Histogramm 34 ausgewertet werden, wenn z.B. 1024 Abtastungen in das Histogramm 34 eingegangen sind.

Aus der Häufigkeit und der Position der erkannten Flanke kann der Schwerpunkt 38 des Histogramms 34 berechnet werden. Ein zeitlicher Versatz 40 zwischen der linken Begrenzungslinie 36a und dem Schwerpunkt 38 gibt die tatsächliche zeitliche Position der Flanke mit hoher Wahrscheinlichkeit an. Der zeitliche Versatz 40 wird dementsprechend auch als ermittelter Versatz bezeichnet.

Aus der Position der Flanke, d.h. aus dem ermittelten Versatz, oder aus einer Interpolation mehrerer ausgewerteter Histogramme kann abschließend die Position des RBGs 12 mit sehr hoher Genauigkeit berechnet werden.

Bezugszeichenliste

| 10 | fahrerloses Transportsystem |
|---|---|
| 12 | Regalbediengerät (RBG) |
| 14 | erste Vorrichtung |
| 16 | erste Sendeeinrichtung |
| 18 | erste Empfangseinrichtung |
| 20 | Mauer |
| 22 | zweite Vorrichtung |
| 24 | zweite Sendeeinrichtung |
| 26 | zweite Empfangseinrichtung |
| 27a | erstes Datensignal |
| 27b | zweites Datensignal |
| 28 | Kanal |
| 30 | Signalverlauf |
| 32a | erster Abtastzeitpunkt |
| 32b | zweiter Abtastzeitpunkt |
| 32c | dritter Abtastzeitpunkt |
| 32d | vierter Abtastzeitpunkt |
| 32e | fünfter Abtastzeitpunkt |
| 34 | Histogramm |
| 36a, 36b | Begrenzungslinie |
| 38 | Schwerpunkt |
| 40 | zeitlicher Versatz |
| S1 | erste Nachricht der ersten Vorrichtung bzw. der damit übermittelte Sendezeitpunkt der ersten Nachricht der ersten Vorrichtung |
| S2 | erste Nachricht der zweiten Vorrichtung bzw. der damit übermittelte Sendezeitpunkt der ersten Nachricht der zweiten Vorrichtung |
| E1 | zweite Nachricht der ersten Vorrichtung bzw. damit übermittelter Empfangszeitpunkt der ersten Nachricht der zweiten Vorrichtung an der ersten Vorrichtung |
| E2 | zweite Nachricht der zweiten Vorrichtung bzw. damit übermittelter Empfangszeitpunkt der ersten Nachricht der ersten Vorrichtung an der zweiten Vorrichtung |

**Patentansprüche**

1. Verfahren zur simultanen Datenübertragung und Abstandsmessung zwischen einer ersten Vorrichtung (14) und einer zweiten Vorrichtung (22), wobei
die erste Vorrichtung (14) und die zweite Vorrichtung (22) jeweils eine zur optischen Datenübertragung ausgebildete Sendeeinrichtung (16, 24), eine zum optischen Datenempfang ausgebildete Empfangseinrichtung (18, 26) und eine mit der Sendeeinrichtung (16, 24) und der Empfangseinrichtung (18, 26) gekoppelte Steuereinheit aufweisen, wobei jede Steuereinheit einen vorbestimmten Systemtakt aufweist, wobei
von der ersten Vorrichtung (14) an die zweite Vorrichtung (22) ein erstes Datensignal (27a) und von der zweiten Vorrichtung (22) an die erste Vorrichtung (14) ein zweites Datensignal (27b) übertragen wird, wobei anhand der übertragenen Datensignale (27a, 27b) der Abstand zwischen der ersten Vorrichtung (14) und der zweiten Vorrichtung (22) ermittelt wird, **dadurch gekennzeichnet, dass**

der zeitliche Versatz von Flanken wenigstens eines des empfangenen Datensignale (27a, 27b) zu dem jeweiligen Systemtakt der empfangenden Vorrichtung mehrmals gemessen wird, um den Abstand zwischen der ersten Vorrichtung (14) und der zweiten Vorrichtung (22) zu ermitteln,
der Systemtakt der ersten Vorrichtung (14) und der Systemtakt der zweiten Vorrichtung (22) zeitlich gegeneinander verschoben werden, so dass aufeinanderfolgende Datenbits eines empfangenen Datensignals jeweils an unterschiedlichen Positionen relativ zu dem Systemtakt der empfangenden Vorrichtung empfangen werden,
ein von der Empfangseinrichtung (18, 26) empfangenes Datensignal überabgetastet wird, um die Position einer Flanke zu bestimmen,
die Bestimmung eines ermittelten Versatzes (40) eine statistische Auswertung einer vorbestimmten Anzahl von Werten des gemessenen Versatzes der Flanken des Datensignals zu dem Systemtakt umfasst und die statistische Auswertung die Zusammenfassung der vorbestimmten Anzahl von Werten des gemessenen Versatzes in einem Histogramm (34) umfasst.

2. Verfahren nach Anspruch 1,
**dadurch gekennzeichnet, dass** der Systemtakt der ersten Vorrichtung (14) und der Systemtakt der zweiten Vorrichtung (22) durch eine Auswahl unterschiedlicher Frequenzen für die Systemtakte der ersten und zweiten Vorrichtung (14, 22) zeitlich gegeneinander verschoben werden.

3. Verfahren nach Anspruch 1 oder 2,
**dadurch gekennzeichnet, dass** das übertragene Datensignal (27a, 27b) beim Empfang in der ersten und/oder der zweiten Vorrichtung (14, 22) mit einer Verzögerung versehen wird.

4. Verfahren nach Anspruch 2 oder 3,
**dadurch gekennzeichnet, dass** die Größe der zeitlichen Verschiebung und/oder die Länge der Verzögerung während der Durchführung des Verfahrens geändert werden.

5. Verfahren nach zumindest einem der vorstehenden Ansprüche,
**dadurch gekennzeichnet, dass** das von der Empfangseinrichtung (18, 26) empfangene Datensignal überabgetastet wird, nämlich zumindest achtfach, bevorzugt zumindest sechzehnfach.

6. Verfahren nach zumindest einem der vorstehenden Ansprüche,
**dadurch gekennzeichnet ,dass** die Bestimmung des ermittelten Versatzes (40) die Ermittlung des Schwerpunktes (38) des Histogramms (34) umfasst.

7. Verfahren nach Anspruch 6,
**dadurch gekennzeichnet, dass** die Bestimmung des ermittelten Versatzes (40) die Berechnung einer linearen Regression zwischen den Schwerpunkten (38) zweier oder mehrerer Histogramme (34) umfasst.

8. Verfahren nach zumindest einem der vorstehenden Ansprüche,
**dadurch gekennzeichnet, dass** vor der Ermittlung des Abstandes zwischen der ersten Vorrichtung (14) und der zweiten Vorrichtung (22) die Systemzeiten der ersten und der zweiten Vorrichtung (14, 22) synchronisiert werden.

9. Verfahren nach Anspruch 8,
**dadurch gekennzeichnet, dass** zur Synchronisierung der Systemzeiten von der ersten und der zweiten Vorrichtung (14, 22) an die jeweils andere Vorrichtung (14, 22)

eine erste Nachricht (S1, S2), welche ihren Sendezeitpunkt bezüglich der Systemzeit der jeweils sendenden Vorrichtung (14, 22) enthält, und
eine zweite Nachricht (E1, E2), welche den Empfangszeitpunkt der ersten Nachricht (S1, S2) bezüglich der jeweils die erste Nachricht (S1, S2) empfangenden Vorrichtung (14, 22) enthält,

versandt werden.

10. Verfahren nach Anspruch 9,
**dadurch gekennzeichnet, dass**
ein Versatz der Systemzeiten der ersten und der zweiten Vorrichtung (14, 22) nach der Formel [(E2 - S1) + (S2 - E1)] / 2 berechnet wird, wobei S1 und S2 Sendezeitpunkte und E1 sowie E2 Empfangszeitpunkte bezeichnen.

11. Verfahren nach Anspruch 10,
**dadurch gekennzeichnet, dass**
die Systemzeit der ersten oder der zweiten Vorrichtung (14, 22) um den Versatz korrigiert wird.

12. Verfahren nach einem der Ansprüche 9 bis 11,
**dadurch gekennzeichnet, dass**
der ermittelte Versatz (40) zu den Empfangszeitpunkten der ersten Nachrichten (S1, S2) addiert wird.

13. System zur simultanen Datenübertragung und Abstandsmessung mit einer ersten Vorrichtung (14) und einer zweiten Vorrichtung (22), wobei die erste Vorrichtung (14) und die zweite Vorrichtung (22) jeweils eine zur optischen Datenübertragung ausgebildete Sendeeinrichtung (16, 24), eine zum optischen Datenempfang ausgebildete Empfangseinrichtung (18, 26) und eine mit der jeweiligen Sendeeinrichtung (16, 24) und der jeweiligen Empfangseinrichtung (18, 26) gekoppelte Steuereinheit aufweisen, wobei die Steuereinheit jeweils mit einem vorbestimmten Systemtakt betreibbar ist, wobei

die erste Vorrichtung (14) und die zweite Vorrichtung (22) ausgebildet sind, jeweils ein Datensignal (27a, 27b) zueinander zu übertragen, wobei zumindest eine der Steuereinheiten ausgebildet ist, anhand des übertragenen Datensignals (27a, 27b) den Abstand zwischen der ersten Vorrichtung (14) und der zweiten Vorrichtung (22) zu ermitteln,

**dadurch gekennzeichnet, dass**

der zeitliche Versatz von Flanken wenigstens eines der empfangenen Datensignale (27a, 27b) zu dem jeweiligen Systemtakt der empfangenden Vorrichtung mehrmals gemessen wird, um den Abstand zwischen der ersten Vorrichtung (14) und der zweiten Vorrichtung (22) zu ermitteln,

der Systemtakt der ersten Vorrichtung (14) und der Systemtakt der zweiten Vorrichtung (22) zeitlich gegeneinander verschoben werden, so dass aufeinanderfolgende Datenbits eines empfangenen Datensignals jeweils an unterschiedlichen Positionen relativ zu dem Systemtakt der empfangenden Vorrichtung empfangen werden, ein von der Empfangseinrichtung (18, 26) empfangenes Datensignal überabgetastet wird, um die Position einer Flanke zu bestimmen,

die Bestimmung eines ermittelten Versatzes (40) eine statistische Auswertung einer vorbestimmten Anzahl von Werten des gemessenen Versatzes der Flanken des Datensignals zu dem Systemtakt umfasst und

die statistische Auswertung die Zusammenfassung der vorbestimmten Anzahl von Werten des gemessenen Versatzes in einem Histogramm (34) umfasst.

**14.** Fahrerloses Transportsystem (10), insbesondere Regalbediensystem, umfassend ein System nach Anspruch 13 und ein fahrerloses Transportfahrzeug (12),

dadurch

die erste Vorrichtung (14) an dem fahrerlosen Transportfahrzeug (12) angebracht ist und die zweite Vorrichtung (22) ortsfest ist.

**Claims**

**1.** A method for simultaneous data transmission and distance measurement between a first apparatus (14) and a second apparatus (22), wherein the first apparatus (14) and the second apparatus (22) each have a transmission device (16, 24) configured for optical data transmission; a reception device (18, 26) configured for optical data reception; and a control unit coupled to the transmission device (16, 24) and to the reception device (18, 26), with each control unit having a predetermined system cycle; wherein

a first data signal (27a) is transmitted from the first apparatus (14) to the second apparatus (22) and a second data signal (27b) is transmitted from the second apparatus (22) to the first apparatus (14), with the distance between the first apparatus (14) and the second apparatus (22) being determined with reference to the transmitted data signals (27a, 27b), **characterized in that**

the time offset of edges of at least one of the received data signals (27a, 27b) from the respective system cycle of the receiving apparatus is measured a multiple of times in order to determine the distance between the first apparatus (14) and the second apparatus (22);

**in that** the system cycle of the first apparatus (14) and the system cycle of the second apparatus (22) are displaced in time with respect to one another such that consecutive data bits of a received data signal are respectively received at different positions relative to the system cycle of the receiving apparatus;

**in that** a data signal received by the reception device (18, 26) is oversampled in order to determine the position of an edge;

**in that** the determination of a determined offset (40) comprises a statistical evaluation of a predetermined number of values of the measured offset of the edges of the data signal from the system cycle; and

**in that** the statistical evaluation comprises the combination of the predetermined number of values of the measured offset in a histogram (34).

**2.** A method in accordance with claim 1,
**characterized in that**

the system cycle of the first apparatus (14) and the system cycle of the second apparatus (22) are displaced in time with respect to one another by a selection of different frequencies for the system cycles of the first and second apparatus (14, 22).

3. A method in accordance with claim 1 or claim 2,
**characterized in that**
the transmitted data signal (27a, 27b) is provided with a delay on the reception in the first and/or second apparatus (14, 22).

4. A method in accordance with claim 2 or claim 3,
**characterized in that**
the amount of the time displacement and/or the length of the delay is/are changed during the carrying out of the method.

5. A method in accordance with at least one of the preceding claims, **characterized in that**
the data signal received by the reception device (18, 26) is oversampled, namely at least eight times, preferably at least sixteen times.

6. A method in accordance with at least one of the preceding claims, **characterized in that**
the determination of the determined offset (40) comprises the determination of barycenter (38) of the histogram (34).

7. A method in accordance with claim 6,
**characterized in that**
the determination of the determined offset (40) comprises the calculation of a linear regression between the barycenters (38) of two or more histograms (34).

8. A method in accordance with at least one of the preceding claims, **characterized in that**
the system times of the first and second apparatus (14, 22) are synchronized before the determination of the distance between the first apparatus (14) and the second apparatus (22).

9. A method in accordance with claim 8,
**characterized in that**,
for the synchronization of the system times of the first and second apparatus (14, 22),

    a first message (S1, S2), which includes its transmission point in time with respect to the system time of the respective transmitting apparatus (14, 22), and
    a second message (E1, E2), which includes the reception point in time of the first message (S1, S2) with respect to the respective apparatus (14, 22) receiving the first message (S1, S2),

are transmitted to the respective other apparatus (14, 22).

10. A method in accordance with claim 9,
**characterized in that**
an offset of the system times of the first and second apparatus (14, 22) is calculated in accordance with the formula $[(E2 - S1) + (S2 - E1)] / 2$, with S1 and S2 designating transmission points in time and E1 and E2 designating reception points in time.

11. A method in accordance with claim 10,
**characterized in that**
the system time of the first or second apparatus (14, 22) is corrected by the offset.

12. A method in accordance with any one of the claims 9 to 11, **characterized in that**
the determined offset (40) is added to the reception points in time of the first messages (S1, S2).

13. A system for simultaneous data transmission and distance measurement comprising a first apparatus (14) and a second apparatus (22), wherein the first apparatus (14) and the second apparatus (22) each have a transmission device (16, 24) configured for optical data transmission; a reception device (18, 26) configured for optical data reception; and a control unit coupled to the respective transmission device (16, 24) and to the respective reception device (18, 26), with the control unit being operable with a respective predetermined system cycle; and wherein the first apparatus (14) and the second apparatus (22) are configured to transmit a respective data signal (27a, 27b) to one another, with at least one of the control units being configured to determine the distance between the first apparatus (14) and the second apparatus (22) with reference to the transmitted data signal (27a, 27b),

**characterized in that**

the time offset of edges of at least one of the received data signals (27a, 27b) from the respective system cycle of the receiving apparatus is measured a multiple of times in order to determine the distance between the first apparatus (14) and the second apparatus (22);

**in that** the system cycle of the first apparatus (14) and the system cycle of the second apparatus (22) are displaced in time with respect to one another such that consecutive data bits of a received data signal are respectively received at different positions relative to the system cycle of the receiving apparatus;

**in that** a data signal received by the reception device (18, 26) is oversampled in order to determine the position of an edge;

**in that** the determination of a determined offset (40) comprises a statistical evaluation of a predetermined number of values of the measured offset of the edges of the data signal from the system cycle; and

**in that** the statistical evaluation comprises the combination of the predetermined number of values of the measured offset in a histogram (34).

14. A driverless transport system (10), in particular a storage and retrieval system, comprising a system in accordance with claim 13 and a driverless transport vehicle (12),

**characterized in that**

the first apparatus (14) is attached to the driverless transport vehicle (12) and the second apparatus (22) is in a fixed position.

**Revendications**

1. Procédé de transmission de données et de mesure de distance simultanées entre un premier dispositif (14) et un second dispositif (22),

dans lequel

le premier dispositif (14) et le second dispositif (22) comprennent chacun un moyen émetteur (16, 24) réalisé pour la transmission optique de données, un moyen récepteur (18, 26) réalisé pour la réception optique de données et une unité de commande couplée au moyen émetteur (16, 24) et au moyen récepteur (18, 26), chaque unité de commande présentant une horloge système prédéterminée, dans lequel

un premier signal de données (27a) est transmis du premier dispositif (14) au second dispositif (22) et un second signal de données (27b) est transmis du second dispositif (22) au premier dispositif (14), et en se basant sur les signaux de données transmis (27a, 27b), on détermine la distance entre le premier dispositif (14) et le second dispositif (22),

**caractérisé en ce que**

on mesure plusieurs fois le décalage temporel des fronts de l'un au moins des signaux de données reçus (27a, 27b) par rapport à l'horloge système respective du dispositif qui les reçoit, afin de déterminer la distance entre le premier dispositif (14) et le second dispositif (22),

l'horloge système du premier dispositif (14) et l'horloge système du second dispositif (22) sont décalées dans le temps l'une par rapport à l'autre, de sorte que des bits de données successifs d'un signal de données reçu sont reçus respectivement à différentes positions par rapport à l'horloge système du dispositif qui les reçoit,

un signal de données reçu par le moyen récepteur (18, 26) est suréchantillonné afin de définir la position d'un front,

la définition d'un décalage déterminé (40) inclut une évaluation statistique d'un nombre prédéfini de valeurs du décalage mesuré des fronts du signal de données par rapport à l'horloge système, et

l'évaluation statistique inclut le regroupement du nombre prédéfini de valeurs du décalage mesuré dans un histogramme (34).

2. Procédé selon la revendication 1,

**caractérisé en ce que**

l'horloge système du premier dispositif (14) et l'horloge système du second dispositif (22) sont décalées dans le temps l'une par rapport à l'autre par une sélection de différentes fréquences pour les horloges systèmes des premier et second dispositifs (14, 22).

**3.** Procédé selon la revendication 1 ou 2,
**caractérisé en ce que**
le signal de données transmis (27a, 27b) est pourvu d'un retard lors de la réception dans le premier et/ou dans le second dispositif (14, 22).

**4.** Procédé selon la revendication 2 ou 3,
**caractérisé en ce que**
l'importance du décalage dans le temps et/ou la durée du retard sont modifiées pendant la mise en oeuvre du procédé.

**5.** Procédé selon l'une au moins des revendications précédentes, **caractérisé en ce que**
le signal de données reçu par le moyen récepteur (18, 26) est suréchantillonné, à savoir au moins huit fois, de préférence au moins seize fois.

**6.** Procédé selon l'une au moins des revendications précédentes, **caractérisé en ce que**
la définition du décalage déterminé (40) inclut la détermination de la priorité (38) de l'histogramme (34).

**7.** Procédé selon la revendication 6,
**caractérisé en ce que**
la définition du décalage déterminé (40) inclut le calcul d'une régression linéaire entre les priorités (38) de deux ou de plusieurs histogrammes (34).

**8.** Procédé selon l'une au moins des revendications précédentes, **caractérisé en ce que**
avant la détermination de la distance entre le premier dispositif (14) et le second dispositif (22), les heures systèmes des premier et second dispositifs (14, 22) sont synchronisées.

**9.** Procédé selon la revendication 8,
**caractérisé en ce que**
pour la synchronisation des heures systèmes des premier et second dispositifs (14, 22), on envoie à l'autre dispositif respectif (14, 22)

un premier message (S1, S2) qui comprend son instant d'émission par rapport à l'heure système du dispositif respectif (14, 22) qui l'envoie, et
un second message (E1, E2) qui comprend l'instant de réception du premier message (S1, S2) par rapport au dispositif respectif (14, 22) qui reçoit le premier message (S1, S2).

**10.** Procédé selon la revendication 9,
**caractérisé en ce que**
un décalage des heures systèmes des premier et second dispositifs (14, 22) est calculé selon la formule $[(E2 - S1) + (S2 - E1)] / 2$, dans laquelle S1 et S2 désignent des instants d'émission, et E1 ainsi que E2 désignent des instants de réception.

**11.** Procédé selon la revendication 10,
**caractérisé en ce que**
l'heure système des premier ou second dispositifs (14, 22) est corrigée du décalage.

**12.** Procédé selon l'une des revendications 9 à 11,
**caractérisé en ce que**
le décalage déterminé (40) est additionné aux instants de réception des premiers messages (S1, S2).

**13.** Système pour la transmission de données et la mesure de distance simultanées entre un premier dispositif (14) et un second dispositif (22), dans lequel
le premier dispositif (14) et le second dispositif (22) comprennent chacun un moyen émetteur (16, 24) réalisé pour la transmission optique de données, un moyen récepteur (18, 26) réalisé pour la réception optique de données et une unité de commande couplée au moyen émetteur respectif (16, 24) et au moyen récepteur respectif (18, 26), l'unité de commande pouvant fonctionner avec une horloge système prédéfinie respective,
dans lequel
le premier dispositif (14) et le second dispositif (22) sont réalisés pour transmettre chacun un signal de données (27a, 27b) l'un vers l'autre, l'une au moins des unités de commande étant réalisée pour déterminer la distance entre le premier dispositif (14) et le second dispositif (22) en se basant sur le signal de données transmis (27a, 27b),

**caractérisé en ce que**

le décalage temporel des fronts de l'un au moins des signaux de données reçus (27a, 27b) par rapport à l'horloge système respective du dispositif qui les reçoit est mesuré plusieurs fois, afin de déterminer la distance entre le premier dispositif (14) et le second dispositif (22),

l'horloge système du premier dispositif (14) et l'horloge système du second dispositif (22) sont décalées dans le temps l'une par rapport à l'autre, de sorte que des bits de données successifs d'un signal de données reçu sont reçus respectivement à différentes positions par rapport à l'horloge système du dispositif qui les reçoit,

un signal de données reçu par le moyen récepteur (18, 26) est suréchantillonné afin de définir la position d'un front,

la définition d'un décalage déterminé (40) inclut une évaluation statistique d'un nombre prédéfini de valeurs du décalage mesuré des fronts du signal de données par rapport à l'horloge système, et

l'évaluation statistique comprend le regroupement du nombre prédéfini de valeurs du décalage mesuré dans un histogramme (34).

14. Système de transport sans conducteur (10), en particulier système transstockeur, comportant un système selon la revendication 13 et un véhicule de transport (12) sans conducteur,

**caractérisé en ce que**

le premier dispositif (14) est monté sur le véhicule de transport (12) sans conducteur et le second dispositif (22) est stationnaire.

Fig. 1

Fig. 2

_Fig. 3_

_Fig. 4_

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008059819 B4
- US 6765495 B1
- WO 9960629 A
- EP 1980870 A1
- US 20140009340 A1
- US 20050058081 A1

**In der Beschreibung aufgeführte Nicht-Patentliteratur**

- **THORBJORNSEN B. et al.** *Radio frequency (RF) time-of-flight ranging for wireless sensor networks,* ISSN 0957-0233
- **SANG-II KO et al.** *A short range measurement using RF signal's propagation time based on vernier effect,* ISBN 978-4-907764-34-0